# EUROPEAN PATENT APPLICATION

(11) **EP 2 947 958 A1**
(43) Date of publication of application: **25.11.2015**
(21) Application number: 13759966.8
(22) Date of filing: 17.01.2013
(51) Int. Cl.: H05B 6/02, F24C 7/00

(54) **INDUCTION RANGE HAVING ADIABATIC TOP STRUCTURE USING BLANKET AND INORGANIC PARTICLES**

(30) Priority: 15.01.2013 KR 20130004565
(71) Applicant: Dipo Induction Co., Ltd., Hanam-si, Gyeonggi-do 465-120 (KR)
(72) Inventor: KWON, Yong-Jai, Seoul 138-160 (KR)
(74) Representative: Zacco Denmark A/S
(86) International application number: PCT/KR2013/000371
(87) International publication number: WO 2014/112664

(57) **Abstract**

The present invention relates to an induction heating range and, more particularly, to an induction heating range having a structure for insulating an upper plate, which can insulate the upper plate to block heat flow from the upper plate to a coil and to discharge heat, thereby improving durability. The induction heating range includes a coil generating an electromagnetic field upon application of current thereto, an upper plate disposed above the coil, on which a heating target is placed, and an insulator attached to a lower side of the upper plate and taking the form of a blanket made of thermal resistant reinforcing fibers and mixed with inorganic particles having nano-scale pores.

## Description

### [Technical Field]

The present invention relates to an induction heating range and, more particularly, to an induction heating range having a structure for insulating an upper plate, which can insulate the upper plate to block heat flow from the upper plate to a coil and to discharge heat, thereby improving durability.

### [Background Art]

With various merits, such as a high energy efficiency of about 90%, minimal fire hazard, and no generation of toxic gases, as compared with a hot plate, a hi-light range and a gas range having an energy efficiency of 30% to 40%, induction heating ranges have been a focus of attention as eco-friendly high-quality cooking devices and are increasingly used in large restaurants, hotels, and the like.

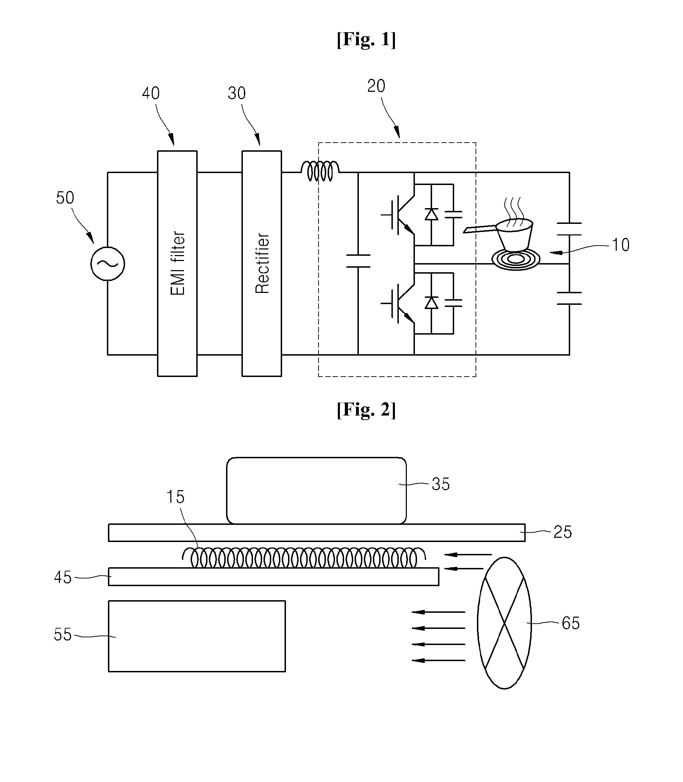

Fig. 1 is a schematic view of a circuit of an induction heating range in the related art.

Referring to Fig. 1, the induction heating range includes a copper coil 10, which generates AC magnetic flux to heat a heating target and is connected to a magnetic circuit 20 for generating AC magnetic flux.

The magnetic circuit 20 is connected to a power circuit, which includes a rectifier 30 and an EMI filter 40, and is connected to an AC power supply 50.

Here, the copper coil, also referred as "an inductor", is the most important component in the induction heating range, and has a few strands of helically-wound copper wire (enamel wire) thereon.

Fig. 2 is a schematic sectional view of the induction heating range.

Referring to Fig. 2, the induction heating range includes an upper plate 25, which is disposed above a copper coil 15 and allows a heating target 35 to be placed thereon. Next, the induction heating range includes a heater base 45 which is disposed under the copper coil 15 and separates a lower structure including a power supply unit 55 from an upper structure including the copper coil 15. Further, the induction heating range includes a cooling fan 65 which provides air circulation for respective spaces between the upper plate 25, the copper coil 15, the heater base 45, and the power supply unit 55 so as to cool the copper coil 15 and the power supply unit 55.

Here, as the heating target placed on the upper plate 25 is heated, heat is transferred to the copper coil 15 and the power supply unit 55, causing problems. That is, the interior of the induction heating range can be subject to thermal impact and thus becomes unstable.

In particular, heat from rectifiers of magnetic and power circuits included in the power supply unit 55, in addition to heat from the copper coil 15, may double the risk of increase in temperature within the induction heating range.

To solve these problems, it has been proposed to increase the size of the cooling fan, or to provide a heat sink within the induction heating range. However, these may result in unnecessary increase in product size.

Further, when the size of the cooling fan is increased to improve cooling efficiency, dust inflow into the induction heating range will be increased due to inherent features of an air-cooling system. Accumulation of dust particles on the copper coil can cause failure, such as short circuit and malfunction.

In addition, deterioration of the cooling fan can lead to additional noise and vibration. In fact, since A/S requests due to this problem account for 70% or more of all A/S requests, there is an urgent need to deal with this problem.

To solve these problems, an induction heating apparatus used for partial heat treatment of metal in industries or factories employs a water-cooling system for cooling copper coils. However, in induction heating ranges prepared as cooking utensils, the water-cooling system is too large to be equipped inside the induction heating range and requires additional maintenance as well as an increased production cost per unit.

To solve the aforementioned problems, the present invention provides an induction heating range with a structure for insulating an upper plate, which can prevent direct heat transfer between a coil and the upper plate and can provide air circulation in a space therebetween to achieve cooling.

One example of a related technique is disclosed in Korean Patent Publication No. 10-2011-0016764 entitled "INDUCTION RANGE HAVING COIL STRUCTURE OF IMPROVED COOLING PERFORMANCE".

### [Disclosure]

### [Technical Problem]

It is an aspect of the present invention to provide an induction heating range which can block heat transfer from an upper plate to a coil to protect the coil.

It is another aspect of the present invention to provide an induction heating range with a structure for insulating an upper plate, which can prevent a coil from being damaged due to heat, thereby improving durability and safety.

It is a further another aspect of the present invention to provide an induction heating range, which can prevent air flow generated from a cooling fan from being disturbed due to an insulator attached to a lower side of an upper plate.

### [Technical Solution]

In accordance with one aspect of the present invention, an induction heating range includes: a coil generating an electromagnetic field upon application of current thereto; an upper plate disposed above the coil, on which a heating target is placed; and an insulator attached to a lower side of the upper plate, the insulator being in the form of a blanket made of thermal resistant reinforcing fibers and mixed with inorganic particles having nano-scale pores.

The insulator may be attached to the lower side of the upper plate, with the entirety of an exposed surface of the insulator covered with heat resistant tape.

The insulator may be sealed between the heat resistant tape and the lower side of the upper plate.

The heat resistant tape may be formed of a polyimide or polyurethane-based material.

The insulator may have a thickness ranging from 1 mm to 5 mm, and a weight ratio of the inorganic particles to the blanket may range from 5:5 to 7:3.

### [Advantageous Effects]

According to the present invention, the induction heating range includes an insulator disposed between a coil and an upper plate and is in the form of a blanket mixed with inorganic particles having nano-scale pores to provide a structure which can reduce direct heat transfer between the upper plate and the coil, thereby preventing the coil from being damaged due to heat.

According to the present invention, the insulator is attached to the lower side of the upper plate, with the exposed surface of the insulator wrapped with a tape, to allow smooth air flow by a cooling fan, thereby ensuring excellent cooling performance.

### [Description of Drawings]

Fig. 1 is a schematic view of a circuit of an induction heating range in the related art.
Fig. 2 is a schematic sectional view of the induction heating range in the related art.
Fig. 3 is a sectional view of an induction heating range according to a first embodiment of the present invention.
Fig. 4 is a sectional view of an induction heating range according to a second embodiment of the present invention.
Fig. 5 is a view of a lower side of an upper plate of the induction heating range according to the second embodiment of the present invention.

### [Best Mode]

The above and other aspects, features, and advantages of the present invention will become apparent from the detailed description of the following embodiments. It should be understood that the present invention is not limited to the following embodiments and may be embodied in different ways, and that the embodiments are provided for complete disclosure and thorough understanding of the invention by those skilled in the art. The scope of the present invention will be defined only by the claims.

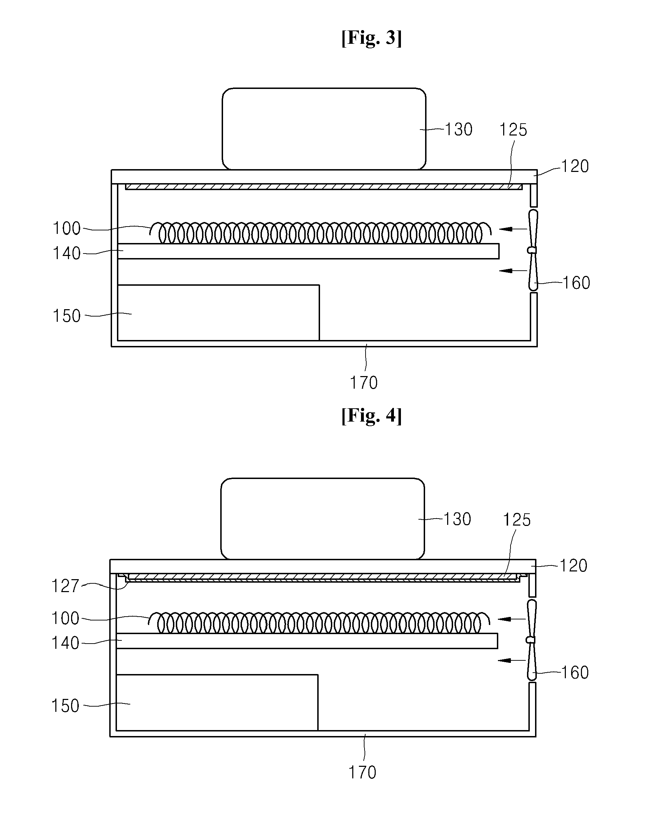

Fig. 3 shows a sectional view of an induction heating range according to a first embodiment of the present invention.

According to the embodiment of the invention, an induction heating range includes an upper plate 120, on which a heating target 130 is placed, and a box-shaped case 170 disposed below the upper plate 120 and receiving components.

A coil 100 for induction heating of a heating target is disposed at the center of the induction heating range. The coil 100 may be a general copper (Cu) coil, or may be made of copper coated with an insulating material. The coil may have any suitable shape for improving induction heating effect and capable of generating heat. However, it should be understood that the present invention is not limited thereto.

The induction heating unit includes a power supply unit 150 for supplying power to the coil 100. Typically, the power supply unit 150 is disposed below the coil by taking into account an inner space of the induction heating range, and may include a separate heat sink to discharge heat from the power supply unit 150.

A heater base 140 is disposed between the coil 100 and the power supply unit 150. The heater base 140 serves as a supporter to support the coil 100 while serving to separate regions of the coil 100 and the power supply unit 150 from each other such that electronic components vulnerable to heat within the power supply unit 150 can be insulated and protected from heat.

A cooling fan 160 is disposed at one side of the coil 100, the heater base 140, and the power supply unit 150 to cool the coil 100 and the power supply unit 150.

The cooling fan 160 allows cooling of components within the induction heating range by supplying external air into the induction heating range and discharging inner heat outwards.

The upper plate 120 may be made of tempered glass, which is not heated by electromagnetic induction.

The upper plate 120 is provided at a lower side thereof with an insulator 125.

The insulator 125 attached to the lower side of the upper plate 120 serves to reduce heat transfer from the upper plate 120 to the coil 100. Otherwise, when the heating target 130 receives heat generated by electromagnetic induction, the heat will be transferred from the heating target 130 to the coil 100 through the upper plate 120, causing damage to the coil 100.

The insulator 125 is in the form of a blanket made of thermal resistant reinforcing fibers and mixed with inorganic particles having nano-scale pores.

As used herein, the term "nano-scale pores" refers to pores having a diameter ranging from 1 nm to 1000 nm.

The blanket is non-woven fabrics of the thermal resistant reinforcing fibers and serves to confine the inorganic particles having nano-scale pores therein.

The inorganic particles having nano-scale pores have excellent heat insulating performance. However, since the inorganic particles are not easy to handle in a particle state, the inorganic particles are mixed with the blanket made of the thermal resistant reinforcing fibers, thereby allowing easy handling of the inorganic particles while ensuring sufficient thickness.

The inorganic particles are not easy to handle in a particle state due to scattering characteristics thereof and are not easy to form into a layer of a constant thickness. Thus, in this invention, the inorganic particles having nano-scale pores are mixed with the blanket made of thermal resistant reinforcing fibers, whereby the inorganic particles can be easily handled and formed to a desired thickness.

The insulator 125 according to the present invention, which takes the form of the blanket of the thermal resistant reinforcing fibers mixed with the inorganic particles having nano-scale pores, is advantageously flexible, light, and easy to cut.

The thermal resistant reinforcing fibers forming the blanket may be composed of fibers capable of withstanding a temperature of about 250°C, for example, oxidized polyacrylonitrile fibers.

A weight ratio of the inorganic particles to the blanket may range from 5:5 to 7:3.

Within this range, the insulator may have a thermal conductivity from 0.015 W/mK to 0.019 W/mK.

If the weight ratio of the inorganic particles to the blanket is above this range, the scattering of the inorganic particles scattered is increased, causing problems due to scattering of the inorganic particles in handling. If the weight ratio of the inorganic particles to the blanket is below this range, thermal conductivity is increased, causing deterioration in heat insulting performance.

The insulator may have a thickness ranging from 0.1 mm to 5 mm, preferably from 1 mm to 5 mm. If the thickness of the insulator is less than 1 mm, the heat insulating performance can be deteriorated, and if the thickness of the insulator exceeds 5 mm, there can be problems, such as weight increase and narrow inner space.

Fig. 4 is a sectional view of an induction range according to a second embodiment of the present invention.

In this embodiment, an insulator 125 in the form of a blanket of thermal resistant reinforcing fibers mixed with inorganic particles having nano-scale pores is attached to a lower side of an upper plate 120 using a heat resistant tape 127.

A cooling fan 160 is disposed in the induction heating range to discharge internal heat. Here, when a surface of the insulator 125 with the blanket and the inorganic particles mixed each other is exposed directly to an inner space of the heating range, the insulator 125 will be resistant to air flow.

In this embodiment, the heat resistant tape is attached over the entire surface of the insulator 125 exposed to the inner space of the induction heating range.

Wrapping of the surface of the insulator with the heat resistant tape 125 can prevent air form being introduced into the insulator to reduce resistance to air flow generated by the cooling fan 160, thereby improving cooling efficiency.

In addition, this can prevent the inorganic particles mixed in places with the blanket from being scattered due to the air flow generated by the cooling fan 160.

Here, the insulator 125 may be sealed between the heat resistant tape 127 and the lower side of the upper plate 120. Sealing of the insulator 125 using the heat resistant tape 127 allows air inside the insulator 125 to be sealed by the heat resistant tape 127, thereby securing an attachment state between the insulator 125 and the upper plate 120.

The heat resistant tape 127 may be made of a polyimide or polyurethane-based material.

By sealing the insulator 125 to the lower side of the upper plate 120 using the heat resistant tape 127 while compressing the insulator 125, pressure in the space sealed by the heat resistant tape 127 becomes lower than outside pressure, thereby securing an attachment state between the insulator 125 and the upper plate 120.

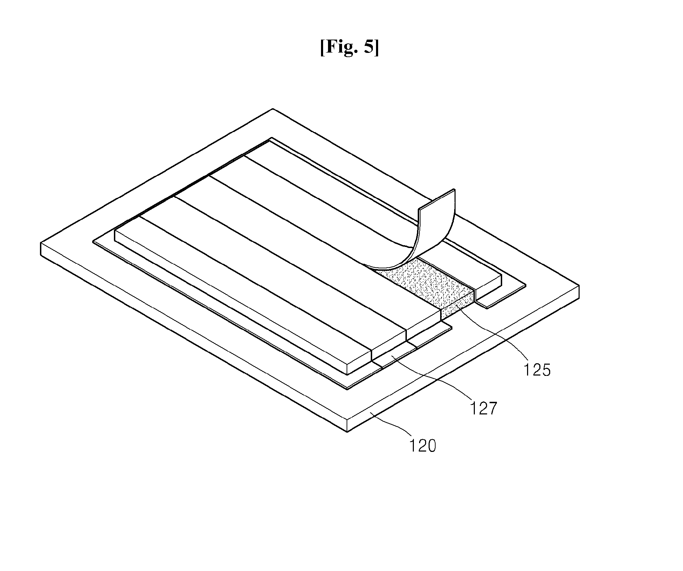

Fig. 5 is a view of a lower side of an upper plate of the induction heating range according to the second embodiment of the present invention.

As shown in Fig. 5, more preferably, the insulator 125 has a smaller size than the upper plate 120 in order to ensure a sufficient area for the heat resistant tape to be attached to the upper plate.

Here, the insulator 125 may be sized to cover a region of the coil.

As described above, to reduce heat transfer from the upper plate 120 to the coil 100, the insulator 125 has a larger size than the region of the coil.

The cooling fan 160 serves to blow external air into the induction heating range and to discharge internal air outwards such that heated air inside the induction heating range can be mixed with external air having a relatively low temperature through circulation of air to cool components inside the induction heating range.

Thus, it is possible to prevent the components inside the induction heating range from being damaged due to heat, thereby providing improved stability and durability to the induction heating range.

Although some embodiments have been described herein, it will be understood by those skilled in the art that these embodiments are provided for illustration only, and various modifications, changes, alterations and equivalent embodiments can be made without departing from the scope of the present invention. Therefore, the scope and sprit of the present invention should be defined only by the accompanying claims and equivalents thereof.

## Claims

1. An induction heating range, comprising:
a coil generating an electromagnetic field upon application of current thereto;
an upper plate disposed above the coil, on which a heating target is placed; and
an insulator attached to a lower side of the upper plate, the insulator taking the form of a blanket made of thermal resistant reinforcing fibers and mixed with inorganic particles having nano-scale pores.

2. The induction heating range according to claim 1, wherein the insulator is attached to the lower side of the upper plate, with the entirety of an exposed surface of the insulator covered with a heat resistant tape.

3. The induction heating range according to claim 2, wherein the insulator is sealed between the heat resistant tape and the lower side of the upper plate.

4. The induction heating range according to claim 2, wherein the heat resistant tape is formed of a polyimide or polyurethane-based material.

5. The induction heating range according to claim 1, wherein the insulator has a thickness ranging from 1 mm to 5 mm.

6. The induction heating range according to claim 1, wherein a weight ratio of the inorganic particles to the blanket ranges from 5:5 to 7:3.

7. The induction heating range according to claim 1, wherein the insulator has a thermal conductivity ranging from 0.015 W/mK to 0.019 W/mK.
